Europäisches Patentamt

European Patent Office

Office européen des brevets

(19)

(11) **EP 0 566 911 B1**

(12) **EUROPEAN PATENT SPECIFICATION**

(45) Date of publication and mention
of the grant of the patent:
**26.08.1998   Bulletin 1998/35**

(51) Int Cl.6: **C09D 7/00**, C08B 11/20,
C08B 31/12, C08B 37/14,
C08F 8/30

(21) Application number: **93105486.0**

(22) Date of filing: **02.04.1993**

(54) **Improved leveling aqueous coating compositions**

Wässrige Beschichtungszzusammensetzungen mit verbesserter Nivellierung

Compositions aqueuses de revêtement au nivellement amélioré

(84) Designated Contracting States:
**AT BE CH DE DK ES FR GB GR IE IT LI LU NL PT SE**

(30) Priority: **20.04.1992  US 871320**

(43) Date of publication of application:
**27.10.1993   Bulletin 1993/43**

(73) Proprietor: **AQUALON COMPANY**
**Wilmington, Delaware 19894-0001 (US)**

(72) Inventors:
- **Kroon, Gijsbert**
  **NL-3364 AN Sliedrecht (NL)**
- **Sau, Arjun Chandra**
  **Newark, Delaware 19711 (US)**

(74) Representative: **Keller, Günter, Dr. et al**
**Lederer, Keller & Riederer**
**Patentanwälte**
**Prinzregentenstrasse 16**
**80538 München (DE)**

(56) References cited:
| | |
|---|---|
| EP-A- 0 138 614 | EP-A- 0 339 712 |
| EP-A- 0 376 196 | EP-A- 0 384 167 |
| EP-A- 0 426 086 | EP-A- 0 465 992 |
| EP-A- 0 471 866 | CA-A- 2 023 058 |
| DE-A- 3 004 161 | US-A- 4 902 733 |

- **DATABASE WPI Week 7924, Derwent Publications Ltd., London, GB; AN 79-45058B & JP-A-54 056 638 (HITACHI CHEMICAL K.K.) 7 May 1979**

EP 0 566 911 B1

## Description

The invention relates to thickeners employed in aqueous coating compositions. In particular, the invention relates to associative thickeners providing improved leveling in aqueous protective coating compositions.

A variety of both natural and synthetic polymers are used as thickeners in many aqueous suspensions and solutions. In an application such as formulation for aqueous latex paint, it is often necessary to use a combination of thickeners to obtain satisfactory performance.

EP-A 0 426 086 discloses cellulose ethers which are hydrophobically modified with a $C_{10}$ to $C_{24}$ long chain alkyl aryl group. The cellulose ethers to be modified had a molecular weight of up to 800,000. EP-A 0 465 992 discloses a process for producing a high solids low viscosity aqueous polysaccharide product by preparing an aqueous mixture of a polysaccharide and an oxidising agent which is capable of depolymerising the polysaccharide. By this process, an aqueous polysaccharide composition can be obtained with a solids content above 30% and a viscosity below 9,500 mPas at 25°C. EP-A 0 471 866 discloses modified water soluble cellulose ethers which can be arbitrarily selected from alkyl, hydroxyalkyl or hydroxyalkylalkyl celluloses having an average molecular weight ranging from 10,000 to 3,000,000. In the examples of this document, celluloses are used having a molecular weight of 180,000, 330,000 or 290,000. DE-A 3 004 161 discloses cellulose derivatives which can also be used for paints. The cellulose derivatives which are used for the paint have a $C_{20}$-modifying substituent. Hydroxyethyl cellulose is disclosed, having a molecular weight of about 80,000. US-A 4 902 733 discloses aqueous protective coating compositions comprising modified cellulose as a thickener. A 1% solution of the modified cellulose derivative disclosed in US-A 4 902 733 had a Brookfield viscosity at 30 rpm of 500 and 520 cps.

Natrosol® Hydroxyethylcellulose - Controls Flow Properties of Latex Paints - Aqualon Publication 250-12A, as well as Natrosol® Plus Modified Hydroxyethylcellulose - Performance as a Latex Paint Thickener - Aqualon Publication 250-18A, are representative of trade literature providing the latex paint formulator with useful information.

The present invention provides improved leveling in an aqueous protective coating composition which contains an associative thickener which is a hydrophobically modified hydroxyethycellulose with a hydroxyethyl Molar Substitution (M.S.) of 2.5 to 4.5 and hydrophobe weight percent substition of 0.2 to 2.5 in $C_{12}$-$C_{18}$ alkyl chain and which has a molecular weight of 10,000 to 60,000.

One preferred composition of the instant invention is an aqueous styrene-acrylic or 100% acrylic latex paint containing 0.1 to 1.5% by weight hydrophobically modified hydroxyethylcellulose with a molecular weight of 20,000 to 60,000 having a hydroxyethyl Molar Substitution (M.S.) of 2.5 to 4.5 and a hydrophobe weight percent substitution of from 0.2 to 2.0.

This invention also is directed to a process for preparing a cellulose associative thickener useful in an aqueous protective coating comprising reacting a cellulose with an alkyl halide, alkylene oxide or chloroacetic acid in the presence of an alkali to prepare a uniformly substituted modified cellulose, reacting the modified cellulose with a hydrophobic alkyl reagent containing a nucleophilic reactive group selected from glycidyl ethers, epoxides, isocyanates, halides, acid halides, or acid anhydrides to produce a water soluble hydrophobically modified cellulose, degrading the hydrophobically modified cellulose by reaction with hydrogen peroxide to obtain a molecular weight of 10,000 to 60,000, and recovering a hydrophobically modified cellulose associative thickener wherein the associative thickener provides improved leveling without adversely affecting sag or thickening efficiency.

Associative thickeners suitable for the practice of the invention are water soluble cellulose polymers which have hydrophobe chains extending outward from the basic polymer chain. In an aqueous latex paint formulation, alkyl hydrophobes containing 12 to 18 carbon atoms overlap to provide the associative behavior.

Yet even with their many desirable viscosifying and shear thinning characteristics, the associative thickeners of the prior art gave improved spatter resistance only at a sacrifice in leveling.

Now it has been discovered that cellulose associative thickeners can provide excellent leveling when the polymer molecular weight falls within the range of 10,000 to 60,000. A preferred hydrophobically modified hydroxyethylcellulose comprises a $C_{12}$ to $C_{18}$ alkyl chain attached by reacting the corresponding glycidyl ether with a hydroxyethylcellulose having a Molar Substitution (M.S.) of 2.5 to 4.5, and a hydrophobe substitution level in $C_{12}$-$C_{18}$ of 0.2 to 2.5 weight percent. Examples of hydrophobic alkyl reagents containing a nucleophilic reactive group beside the glycidyl ethers are epoxides, isocyanates, halides (e.g., stearic bromide), acid halides (e.g., stearic acid chloride, myristic acid chloride, and stearic acid bromide), or acid anhydrides (e.g., stearic acid anhydride, myristic acid anhydride).

Prefered embodiments of the present invention are defined in claims 2 and 4 to 6.

Aqualon is a source of natural polymer based associative thickeners along with Union Carbide and Berol Nobel, while Rohm & Haas and Union Carbide supply synthetic associative thickeners. Trademark identification associated with these associative thickeners include Natrosol® Plus, Spatter Guard™, Bermocoll®, Acrysol® and Polyphobe®. However, new identifications may come into being as a result of the discovery described herein.

The invention has industrial applicability for protective coatings to be applied to provide a surface. The following preparations, examples and reference examples illustrate the practice of the invention without being limiting. With all examples, paints were thickened to closely similar viscosities.

| PREPARATION A | |
|---|---|
| Latex gloss paint formulation (PVC 15%, Primal® HG74D) | |
| | Parts by Weight |
| Water | 49.5 |
| Calgon® N | 2.0 |
| Tamol® 731 | 0.7 |
| CA 24 | 0.5 |
| Agitan® 280 | 1.0 |
| Thickener | by demand |
| Kronos® RN 63 | 210.0 |
| Primal® HG74D | 670.0 |
| Texanol® | 12.0 |
| Water | 52.0 (balance) |
| | 1000.0 |
| Non Volatiles by Weight (% w/w) : | 52.6 |
| Pigment Volume Concentration (%) : | 15.0 |

| PREPARATION B | |
|---|---|
| Latex gloss paint formulation (PVC 15%, Neocryl® XK 75) | |
| | Parts by Weight |
| Water | 49.5 |
| Calgon® N | 2.0 |
| Tamol® 731 | 1.0 |
| CA 24 | 0.5 |
| Agitan® 280 | 1.0 |
| Thickener | by demand |
| Tioxide® RH D2 | 210.0 |
| Neocryl® XK 75 | 670.0 |
| Texanol® | 12.0 |
| Water | 52.0 (balance) |
| | 1000.0 |
| Non Volatiles by Weight (% w/w) : | 52.6 |
| Pigment Volume Concentration (%) : | 15.0 |

| PREPARATION C | |
|---|---|
| Latex gloss paint formulation (PVC 15%, Degalex® VPBF) | |
| | Parts Weight |
| Water | 49.5 |
| Calgon® N | 2.0 |
| Tamol® 731 | 0.7 |
| CA 24 | 0.5 |
| Agitan® 280 | 1.0 |
| Thickener | by demand |
| Kronos® RN 63 | 210.0 |
| Degalex® VPBF | 670.0 |

(continued)

| PREPARATION C | |
|---|---|
| Latex gloss paint formulation (PVC 15%, Degalex® VPBF) | |
| | Parts Weight |
| Texanol® | 12.0 |
| Water | 52.0 (balance) |
| | 1000.0 |
| Non Volatiles by Weight (% w/w) : | 52.6 |
| Pigment Volume Concentration (%) : | 15.0 |

| PREPARATION D | |
|---|---|
| Semigloss Paint Formulation | |
| Grind | Parts by Weight |
| Propylene Glycol | 542.5 |
| Tamol® SG-1 | 57.7 |
| Hercules® SGL Defoamer | 13.6 |
| Ti-Pure® R-900 | 1627.5 |
| Imsil® A-15 | 169.6 |
| Let Down | |
| Rhoplex® AC-417 | 3390.6 |
| Hercules® SGL Defoamer | 18.4 |
| Propylene Glycol | 67.9 |
| Texanol® | 146.5 |
| Proxel® GXL | 6.8 |
| Triton® GR-7M | 3.5 |
| Water | 140.5 |
| | 6185.1 |

| PREPARATION E | |
|---|---|
| Exterior Flat Paint Formulation | |
| Grind | Parts by Weight |
| Water | 720.0 |
| Foamaster® VL | 6.0 |
| Ethylene Glycol | 167.4 |
| Tamol® 850 | 63.0 |
| KTPP | 9.0 |
| Triton® CF-10 | 15.0 |
| Ti-Pure® R-902 | 1620.0 |
| Horsehead® XX-503R | 300.0 |
| Minex™ 4 | 900.0 |

Disperse to Hegman 6 on a high-speed disperser and let-down as follows:

| Let Down | Parts by Weight |
|---|---|
| Rhoplex® AC-64 | 2291.4 |
| Foamaster® VL | 18.0 |

(continued)

| Let Down | Parts by Weight |
|---|---|
| Texanol® | 69.6 |
| Skane® M-8 | 9.0 |
| Total | 6188.4 |

PREPARATION F

Preparation of Lower Molecular Weight Associative Thickeners by Hydrogen Peroxide Degradation of Polymer Chains

Commercially available and laboratory synthesized hydrophobically modified guar, starch, guar derivatives, starch ethers, hydroxyethylcellulose, ethylhydroxyethylcellulose, carboxymethylcellulose, hydroxypropylcellulose, methylhydroxypropylcellulose, methylhydroxyethylcellulose, carboxymethylhydroxyethylcellulose, and methylcellulose are suspended in acetone and reacted at 110°C with 30% hydrogen peroxide. By continuing the reaction, it is possible to start with guar, guar derivatives, starch, starch ethers and cellulose ethers having molecular weights above 300,000 and degrade the polymers into the desired molecular weight range.

While Preparation F employs hydrogen peroxide to effect molecular weight reductions of hydrophobically modified polysaccharide based polymers, it should be recognized that other common methods for reducing the molecular weight of cellulose polymers are also useful for the purposes of this invention. Examples include acid and enzymic hydrolysis.

Preparation F was used to prepare materials tested in the following examples and reference examples which were otherwise not available to give the desired leveling. In the case of hydrophobically modified poly(vinyl alcohol), the molecular weight was varied by selecting the different molecular weight grades of poly(vinyl alcohol).

Example 1

The latex gloss paint formulation of Preparation A was prepared containing either associative or non-associative polysaccharide thickeners. Table 1 contains results obtained with low molecular weight hydrophobically modified hydroxyethylcelluloses (HMHECs). In all cases hydroxyethylcellulose was modified with a $C_{16}$ alkyl glycidyl ether to form the HMHEC.

Table 1

| Thickener | Hydrophobe Wt. % | Mol. Wt. | Amount (% w/w) | Leveling | Gloss 60° | Sag |
|---|---|---|---|---|---|---|
| HEC | - | 87,000 | 1.05 | 3 | 80 | 300 |
| HEC | - | 290,000 | 0.59 | 4 | 78 | 300 |
| HEC | - | 690,000 | 0.33 | 5 | 78 | 300 |
| HMHEC | 0.96 | >300,000 | 0.26 | 5 | 77 | 300 |
| HMHEC | 0.43 | >300,000 | 0.31 | 6 | 74 | 300 |
| HMHEC | 1.09 | 129,000 | 0.40 | 7 | 77 | 300 |
| HMHEC | 1.09 | 81,500 | 0.41 | 8 | 78 | 300 |
| HMHEC | 1.44 | 45,500 | 0.40 | 10 | 79 | 300 |
| HMHEC | 1.02 | 36,000 | 0.53 | 10 | 80 | 300 |

As shown in Table 1, a reductiun in molecular weight of the control HEC gives inferior leveling similar to two samples of HMHEC with molecular weights over 300,000 with values roughly equivalent within experimental error. But, a dramatic improvement in leveling occurs as the HMHEC molecular weight is lowered without adversely affecting gloss or sag resistance. Thickeners 1 to 7 are comparative.

Example 2

Example 1 was repeated except that low molecular weight HMHECs were evaluated in Preparation B. Table 2 gives comparative results. Hydrophobic modification was with $C_{16}$.

Table 2

| Thickener | Hydrophobe Wt. % | Mol. Wt. | Amount (% w/w) | Leveling | Gloss 60° | Sag |
|-----------|------------------|----------|----------------|----------|-----------|-----|
| HMHEC | 1.02 | >300,000 | 0.13 | 8 | 74 | 300 |
| HMHEC | 1.02 | 30,000 | 0.22 | 10 | 75 | 300 |

As shown in Table 2, it was an unexpected result to be able to improve leveling without influencing other paint properties by simply adding a larger amount of a thickener with only one-tenth the molecular weight.

Example 3

Example 1 was repeated except that low molecular weight HMHECs were evaluated in Preparation C. Table 3 gives comparative results.

Table 3

| Thickener | Hydrophobe Wt. % | Mol. Wt. | Amount (% w/w) | Leveling | Gloss 60° | Sag |
|-----------|------------------|----------|----------------|----------|-----------|-----|
| HMHEC | 1.02 | >300,000 | 0.32 | 5 | 80 | 300 |
| HMHEC | 1.02 | 30,000 | 0.53 | 10 | 81 | 300 |

Table 4

| No. | Thickener Type** | Hydroprobe Type | Hydroprobe % w/w | CM-DS | HP-MS | Brookfield Viscosity (mPas) | (% sol.) | (rpm) | Thickener (% w/w) | Stormer Viscosity (KU) | Leveling |
|---|---|---|---|---|---|---|---|---|---|---|---|
| 1 | Poly(vinyl alcohol) (Mw 98000) | C18 | 0.7 | - | - | 23000 | 5 | 12 | 0.49 | 91 | 6-7 |
| 2 | Poly(vinyl alcohol) (Mw 22000) | C18 | 0.7 | - | - | 12 | 5 | 30 | 1.09 | 92 | 5-6 |
| 3 | Poly(vinyl alcohol) (Mw 22000) | C18 | 1.3 | - | - | 320 | 5 | 30 | 0.52 | 90 | 8-9 |
| 4 | CMHP-Starch | C18 | 0.7 | 0.15 | 0.6 | 6400 | 8 | 30 | 0.49 | 89 | 4-5 |
| 5* | CMHP-Starch | C18 | 0.7 | 0.15 | 0.6 | 54 | 8 | 30 | 1.01 | 91 | 6 |
| 6* | CMHP-Starch | C18 | 1.3 | 0.15 | 0.6 | 680 | 8 | 30 | 0.68 | 92 | 8 |
| 7 | MHEC 15000 | C18 | 0.7 | - | - | 10400 | 2 | 30 | 0.28 | 90 | 4 |
| 8* | MHEC 15000 | C18 | 0.7 | - | - | 524 | 2 | 30 | 0.45 | 93 | 6-7 |
| 9 | MHPC 400 | C18 | 0.7 | - | - | 9000 | 5 | 30 | 0.30 | 94 | 5-6 |
| 10* | MHPC 400 | C18 | 0.7 | - | - | 82 | 5 | 30 | 0.73 | 92 | 6-7 |
| 11 | Hydroxypropylguar | C18 | 0.7 | - | 0.54 | 5500 | 2 | 30 | 0.28 | 93 | 2 |
| 12* | Hydroxypropylguar | C18 | 0.7 | - | 0.54 | 360 | 5 | 30 | 0.60 | 92 | 8 |
| 13 | CMHEC | C16 | 1.4 | 0.7 | - | ND | ND | ND | 1.41 | 91 | 8 |
| 14 | CMHEC | C16 | 1.4 | 0.7 | - | ND | ND | ND | 2.20 | 93 | 10 |
| 15 | HEC | C18 | 0.7 | - | - | 8800 | 2 | 30 | 0.21 | 93 | 3 |
| 16 | HEC | C18 | 0.7 | - | - | 24 | 2 | 30 | 0.51 | 92 | 9 |
| 17 | HEC | Nonylphenyl | 1.0 | - | - | 5600 | 2 | 30 | 0.16 | 91 | 5 |
| 18 | HEC | Nonylphenyl | 1.0 | - | - | 6.2 | 2 | 30 | 0.54 | 91 | 8 |

\* Samples 5, 6, 8, 10, 12, 14, 16 and 18 were degraded with hydrogen peroxide.
\*\* Samples 1 through 16 except samples No. 13 and 14 were prepared according to a solvent process using dimethylsulfoxide as a solvent and stearyl isocyanate as the hydrophobic reagent.

CMHP-Starch = Carboxymethylhydroxypropyl starch; MHEC = Methylhydroxyethylcellulose;
MHPC = Methylhydroxypropylcellulose; CMHEC = Carboxymethylhydroxyethylcellulose;
CM-DS = Carboxymethyl Degree of Substitution; HP-MS = Hydroxypropyl Molar Substitution.

As shown in Table 3 the effect is even more dramatic than in Example 2.

Example 4

Example 1 was repeated except both polysaccharide and synthetic polymers were used employing Preparation F to reduce the molecular weight as required. Table 4 gives comparative data of the effects using Preparation A.

As shown in each case the molecular weight reduction improves the leveling at a constant viscosity level. Other paint properties were equivalent.

Example 5 (reference example)

Hydrophobically modified hydroxyethylcellulose with molecular weights of 150,000 to 300,000 were prepared according to Preparation F. In all cases a hydrophobically modified polysaccharide was obtained with a molecular weight of 300,000 or lower.

Samples were evaluated in Preparations D and E in the same manner as in Examples 1-4. Table 5 gives comparative results.

Table 5

| Thickener | Hydrophobe Type | Hydrophobe Wt. % | Mol. Wt. | Amount (% w/w) | Stormer Viscosity (KU) | Leveling |
|---|---|---|---|---|---|---|
| HMHEC | $C_{12}/C_{13}$ | 0.44 | 300,000 | 0.53 | 90 | 8 |
| HMHEC | $C_{12}/C_{13}$ | 0.57 | 300,000 | 0.43 | 90 | 8 |
| HMHEC | $C_{12}/C_{13}$ | 0.98 | 150,000 | 0.62 | 90 | 8 |

As shown above, excellent leveling is obtained in two standard United States latex paint formulations wherein the molecular weight of the polysaccharides is from 150,000 to 300,000.

Example 6 (reference example)

The leveling performance was measured for a series of hydrophobically modified hydroxyethylcelluloses with different degrees of hydrophobe substitution. These were evaluated as thickeners in Preparations D and E. Table 6 contains comparative results illustrating how $C_{12}/C_{14}$ HMHECs (HE M.S. ~ 2.5 - 4.5) with certain degrees of hydrophobic modification provide improved leveling.

Table 6

| Hydrophobe Wt. % | Mol. Wt. | Thickener (% w/w) | Stormer Viscosity (KU) | Leveling |
|---|---|---|---|---|
| 0.35 | 300,000 | 0.43 | 90 | 6 |
| 0.42 | 300,000 | 0.41 | 90 | 8 |
| 0.52 | 300,000 | 0.48 | 90 | 8 |
| 0.66 | 300,000 | 0.43 | 90 | 8 |
| 0.74 | 300,000 | 0.48 | 90 | 5 |
| 1.10 | 300,000 | 0.35 | 90 | 5 |

As shown in Table 6, paint leveling is sensitive to HMHEC hydrophobe content and is optimum between hydrophobe levels of 0.42 to 0.66 weight percent.

## Claims

1. An aqueous protective coating containing an associative thickener, characterized in that the associative thickener is a hydrophobically modified hydroxyethylcellulose with a hydroxyethyl Molar Substitution (M. S.) of 2.5 to 4.5 and hydrophobe weight percent substitution of 0.2 to 2. 5 in $C_{12}$-$C_{18}$ alkyl chain, which has a molecular weight of 10,000 to 60,000 wherein the coating exhibits improved leveling.

2. The coating of claim 1 where the hydrophobically modified hydroxyethylcellulose has a hydrophobe weight percent substitution of 0.4 to 1.2.

3. A process for preparing a cellulose associative thickener useful in an aqueous protective coating comprises the steps:

(1) reacting a cellulose with an alkyl halide, alkylene oxide or chloroacetic acid in the presence of an alkali to prepare a uniformly substituted modified cellulose,

(2) reacting the modified cellulose with a hydrophobic alkyl reagent containing a nucleophilic reactive group selected from glycidyl ethers, epoxides, isocyanates, halides, acid halides, or acid anhydrides to produce a water soluble hydrophobically modified cellulose.

(3) degrading the hydrophobically modified cellulose by reaction with hydrogen peroxide to obtain a molecular weight of 10,000 to 60,000, and

(4) recovering a hydrophobically modified cellulose associative thickener wherein the associative thickener provides improved leveling without adversely affecting sag or thickening efficiency.

**4.** The process of claim 3 where the modified cellulose produced in step (1) is hydroxyethylcellulose.

**5.** The process of claim 3 where in step (2) the glycidyl ether is a $C_{12}$-$C_{18}$ alkyl glycidyl ether.

**6.** The process of claim 4 where in step (3) a hydrophobically modified hydroxyethylcellulose is degraded to a molecular weight of 10,000 to 60,000.

**Patentansprüche**

**1.** Wäßrige Schutzbeschichtung, die ein assoziatives Verdikkungsmittel enthält, dadurch gekennzeichnet, daß das assoziative Verdickungsmittel eine hydrophob modifizierte Hydroxyethylcellulose mit einer molaren Hydroxyethylsubstitution (M.S.) von 2,5 bis 4,5 und einer hydrophoben Substitution in Gew.-% von 0,2 bis 2,5 als $C_{12}$-$C_{18}$-Alkylkette ist, das ein Molekulargewicht von 10 000 bis 60 000 hat, wobei die Beschichtung eine verbesserte Verlaufsbildung aufweist.

**2.** Beschichtung nach Anspruch 1, worin die hydrophob modifizierte Hydroxyethylcellulose einen Gew.-%-Anteil an hydrophober Substitution von 0,4 bis 1,2 hat.

**3.** Verfahren zur Herstellung eines assoziativen Celluloseverdickungsmittels, das für eine wäßrige Schutzbeschichtung geeignet ist, umfassend die Stufen, daß man:

(1) eine Cellulose mit einem Alkylhalogenid, Alkylenoxid oder Chloressigsäure in Gegenwart von Alkali umsetzt, um eine gleichmäßig substituierte modifizierte Cellulose herzustellen,
(2) die modifizierte Cellulose mit einem hydrophoben Alkylreagenz umsetzt, das eine nucleophile reaktive Gruppe enthält ausgewählt aus Glycidylethern, Epoxiden, Isocyanaten, Halogeniden, Säurehalogeniden oder Säureanhydriden, um eine wasserlösliche hydrophob modifizierte Cellulose herzustellen,
(3) die hydrophob modifizierte Cellulose durch Reaktion mit Wasserstoffperoxid abbaut, um ein Molekulargewicht von 10 000 bis 60 000 zu erhalten und
(4) ein hydrophob modifiziertes assoziatives Celluloseverdickungsmittel gewinnt, wobei das assoziative Verdickungsmittel eine verbesserte Verlaufsbildung liefert, ohne die Gardinenbildungseigenschaften oder Verdickkungseffizienz negativ zu beeinflussen.

**4.** Verfahren nach Anspruch 3, worin die in Stufe (1) erzeugte modifizierte Cellulose Hydroxyethylcellulose ist.

**5.** Verfahren nach Anspruch 3, worin in Stufe (2) der Glycidylether ein $C_{12}$-$C_{18}$-Alkylglycidylether ist.

**6.** Verfahren nach Anspruch 4, worin in Stufe (3) eine hydrophob modifizierte Hydroxyethylcellulose auf ein Molekulargewicht von 10 000 bis 60 000 abgebaut wird.

**Revendications**

**1.** Revêtement protecteur aqueux contenant un épaississant associatif, caractérisé en ce que l'épaississant associatif est une hydroxyéthylcellulose hydrophobiquement modifiée avec substitution molaire (S.M.) hydroxyéthylique de 2,5 à 4,5 et une substitution hydrophobe en pourcentage pondéral de 0,2 à 2,5 dans la chaîne alkylique en $C_{12}$ à $C_{18}$, qui possède un poids moléculaire de 10.000 à 60.000, où le revêtement manifeste un étalement amélioré.

**2.** Revêtement suivant la revendication 1, caractérisé en ce que l'hydroxyéthylcellulose hydrophobiquement modifiée possède une substitution hydrophobe en pourcentage pondéral de 0,4 à 1,2.

**3.** Procédé de préparation d'un épaississant associatif cellulosique intéressant dans un revêtement protecteur aqueux, caractérisé en ce qu'il comprend les étapes consistant à

(1) faire réagir une cellulose avec un halogénure d'alkyle, un oxyde d'alkylène, ou l'acide chloracétique, en présence d'un alcali, afin de préparer une cellulose modifiée uniformément substituée,

(2) faire réagir la cellulose modifiée avec un réactif alkylique hydrophobe contenant un groupe réactif nucléophile, choisi parmi les éthers glycidyliques, les époxydes, les isocyanates, les halogénures, les halogénures d'acides, ou les anhydrides d'acides, afin de produire une cellulose hydrophobiquement modifiée et soluble dans l'eau.

(3) dégrader la cellulose hydrophobiquement modifiée par réaction avec du peroxyde d'hydrogène pour obtenir un poids moléculaire de 10.000 à 60.000 et

(4) récupérer un épaississant associatif à base de cellulose hydrophobiquement modifiée, où l'épaississant associatif confère un étalement amélioré sans pour autant nuisiblement affecter l'écoulement ou l'efficience d'épaississement.

4. Procédé suivant la revendication 3, caractérisé en ce que la cellulose modifiée produite au cours de l'étape (1) est l'hydroxyéthylcellulose.

5. Procédé suivant la revendication 3, caractérisé en ce qu'au cours de l'étape (2), l'éther glycidylique est un éther alkyl($C_{12}$-$C_{18}$)glycidylique.

6. Procédé suivant la revendication 4, caractérisé en ce qu'au cours de l'étape (3), on dégrade une hydroxyéthylcellulose hydrophobiquement modifiée jusqu'à un poids moléculaire de 10.000 à 60.000.